# EUROPEAN PATENT APPLICATION

(11) **EP 1 316 873 A2**
(43) Date of publication of application: **04.06.2003**
(21) Application number: 02257807.4
(22) Date of filing: 11.11.2002
(51) Int. Cl.: G06F 1/00

(54) **System and method for identifying infected program instructions**

(30) Priority: 29.11.2001 US 997454
(71) Applicant: Hewlett-Packard Company, Palo Alto, California 94304-1185 (US)
(72) Inventor: Mateev, Nikolay, Acton, MA 01720 (US); Desoli, Giuseppe, Watertown, Ma 02472 (US)
(74) Representative: Jehan, Robert

(57) **Abstract**

The present disclosure relates to a system (300) and method (700) for virus checking program binaries. In one arrangement, the system (300) and method (700) pertain to intercepting program instructions (702), determining if associated instructions contain one or more sets of "signature" bytes identified with a known virus (712), and releasing the intercepted code to computer hardware (104) only after determining that the intercepted code is clear of a virus signature.

## Description

The present disclosure relates to systems and methods for dynamic transformation of executing binary program code. More particularly, the disclosure relates to a system and method for virus checking executable code.

A computer virus is a program with two distinct functions. First, a computer virus spreads itself from machine to machine (self-reproducing code). This includes the actual infection of other systems as well as the stashing away of code into as many "carriers" as possible. Second, a computer virus implements the "symptoms" planned by the perpetrator of the virus. This could be any number of things, from displaying a message on a monitor up to and including erasing the contents of a fixed data disk on a specific date.

Computer viruses and other forms of electronic "infection" have been around for almost as long as computers. John Van Neumann, the father of the modern computer, toyed with the idea of self-reproducing computer code as early as 1948. Many different forms of electronic infection are recognized. The most common are: piggyback viruses, e-mail viruses, worms, and Trojan horses. A piggyback virus is a small piece of software that "piggy-backs" on real programs. For example, a virus might attach itself to a program like a spreadsheet program. Each time the spreadsheet program runs, the virus runs too, and it has the chance to reproduce (by attaching to other programs) or wreak havoc. An e-mail virus moves from computer to computer in e-mail messages, and usually replicates itself by automatically mailing itself to dozens of people in the victim's address book. A worm is a small piece of software that uses computer networks and security holes to replicate itself. A copy of the worm scans the network for another machine that has a specific security hole. It copies itself to the new machine using the security hole, and then starts replicating from there as well. A Trojan horse is simply a normal computer program. The program claims to do one thing (*e.g. -* it claims to be a game) but instead does damage when you run it (*e.g.* - it erases your hard disk). Trojan horses have no way to replicate automatically.

Early viruses were pieces of code attached to a common program like a popular game or a popular word processor. A person might download an infected game from a bulletin board and run the infected file. A virus like this is a small piece of code embedded in a larger, legitimate program. Any virus is designed so it runs first when the legitimate program gets executed. The virus loads itself into memory and looks around to see if it can find any other programs on the disk. If it can find one, it modifies it to add the virus' code to the unsuspecting program. Then the virus launches the "real program." The user really has no way to know that the virus ever ran. Unfortunately, the virus has now reproduced itself, so two programs are infected. The next time either of those programs gets executed, they infect other programs, and the cycle continues.

If one of the infected programs is given to another person on a floppy disk, or if it is uploaded to a bulletin board, then other programs get infected. This is how the virus spreads.

The spreading part is the "infection" phase of the virus. Viruses would not be so violently despised if all they did was replicate themselves. Unfortunately, most viruses also have some sort of destructive "attack" phase where they do some damage. Some sort of trigger will activate the attack phase, and the virus will then "do something" -- anything from printing a silly message on the screen to erasing all of your data. The trigger might be a specific date, or the number of times the virus has been replicated, or something similar.

As virus creators got more sophisticated, they learned new tricks. One important trick was the ability to load viruses into memory so they could keep running in the background as long as the computer remained on. This gave viruses a much more effective way to replicate themselves. Another trick was the ability to infect the boot sector on floppy disks and hard disks. The boot sector is a small program that is the first part of the operating system that the computer loads. The boot sector contains a tiny program that tells the computer how to load the rest of the operating system. By putting its code in the boot sector, a virus can guarantee it gets executed. It can load itself into memory immediately and it is able to run whenever the computer is on. Boot sector viruses can infect the boot sector of any floppy disk inserted in the machine, and on college campuses where lots of people share machines they spread like wildfire.

In general, both executable and boot sector viruses are not very threatening any more. The first reason for the decline has been the huge size of today's programs. The programs are so big that the only easy way to move them around is to buy the compact disc. Nearly every program you buy today comes on a read only compact disc. These read only compact discs cannot be modified. Because the data cannot be changed, these compact discs cannot be infected. People certainly can't carry applications around on a floppy disk like they did in the 1980s, when floppies full of programs were traded like baseball cards. Boot sector viruses have also declined because operating systems now protect the boot sector.

Both boot sector viruses and executable viruses are still possible, but they are a lot harder now and they do not spread nearly as fast as they once could. The environment of floppy disks, small programs and weak operating systems made viruses possible in the 1980s, but that environmental niche has been largely eliminated by huge executables, read only compact discs, more thorough operating system safeguards, and vast computer networks.

Next, virus creators looked to e-mail and networks for convenient delivery methods. The Melissa virus made a spectacular debut in March of 1999. Melissa spread in Microsoft Word documents sent via e-mail. The creator of the virus placed the infecting code in a Word document and uploaded the document to an Internet newsgroup. Anyone who downloaded the document and opened it triggered the virus. The virus would then send the document (and therefore itself) in an e-mail message to the first 50 people in the user's address book. The e-mail message contained a friendly note that included the user's name, so the recipient would open the document thinking it was harmless. The virus would then create 50 new messages from the recipient's machine. As a result, the Melissa virus was the fastest-spreading virus ever seen!

The ILOVEYOU virus, which appeared in May of 2000, was even simpler. It contained a piece of self-replicating code as an e-mail attachment. People who double clicked on the attachment (thereby opening the attachment) allowed the code to execute. The code sent copies of itself to everyone in the victim's address book and then started corrupting files on the victim's machine. This is as simple as a virus can get. It is really more of a Trojan horse distributed by e-mail than it is a virus.

The Melissa virus took advantage of a programming language built into Microsoft Word called Visual Basic for Applications (VBA). It is a complete programming language and it can be programmed to do things like modify files and send e-mail messages. It also has a useful but dangerous auto-execute feature. A programmer can insert a program into a document that runs instantly whenever the document is opened. This is how the Melissa virus was programmed. Anyone who opened a document infected with Melissa would immediately activate the virus. Melissa would send the 50 e-mails, and then infect a central file; NORMAL.DOT so that any file saved later would also contain the virus!

Microsoft software applications, some of the most popular business applications, have a feature called Macro Virus Protection built in to them to prevent infection via a macro. If you turn the Macro Virus Protection feature "ON," then the auto-execute feature is disabled. By default the option is "ON." Thus, when a document tries to auto-execute infected code a dialog pops up warning the user. Unfortunately, many people don't know what macros or macro viruses are, and when they see the dialog they ignore it. Consequently, less virus-savvy operators often run the virus anyway. Many other people turn off the protection mechanism and never receive the warning dialog. As a result, the Melissa virus spread despite the safeguards in place to prevent it.

In the case of the ILOVEYOU virus, the entire infection process was human-powered. If a person double-clicked on the program (delivered as an e-mail attachment), then the program ran, thus distributing the virus. Human willingness to open the executable attachment fueled the ILOVEYOU virus.

Other infamous viruses have taken advantage of other human weaknesses. For example, the Anna Kournikova virus was named after a professional tennis player and model. The creator used, "You've got to see this ..." in the subject line of the e-mail message. The body of the message promised photographs of Anna. Apparently more than a few males fell for this method of enticement to double-click on the executable attachment.

Unlike viruses that generally rely on human activity to distribute the underlying code, a worm has the ability to copy itself from machine to machine without human intervention. Worms normally move around and infect other machines through computer networks. Using a network, a worm can expand from a single copy incredibly quickly. For example, the Code Red worm replicated itself over 250,000 times in approximately nine hours in July of 2001.

Worms use up computer time and network bandwidth when they are replicating, and they often have some sort of evil intent. The Code Red worm slowed down Internet traffic (but not nearly as badly as predicted) when it began to replicate itself. Each copy of the worm scans the Internet for unpatched (*i.e*., unprotected) Windows NT or Windows 2000 servers. Each time it finds an unsecured server, the worm copies itself to that server. The new copy then scans for other servers to infect. Depending on the number of unsecured servers, a worm could conceivably create hundreds of thousands of copies before it enters its destructive phase.

For example, the Code Red worm is designed to a) replicate itself for the first 20 days of each month; b) replace web pages on infected servers with a page that declares, "Hacked by Chinese;" and c) launch a concerted attack on one or more web servers in an attempt to overwhelm them.

Since 1987, when a virus infected the Advanced Research Projects Agency Network (ARPANET), a large network used by the U.S. Defense Department and universities, many anti-virus programs have become available. These programs periodically check a computer system for the best-known types of viruses. With more commercial endeavors inextricably integrated and relying upon both local area and wide area networks such as the Internet, anti-virus programs and other computer virus protection methods have become increasingly important in protecting data.

A simple virus that merely replicates itself is the easiest to detect. If a user launches an infected program, the virus gains control of the computer and attaches a copy of itself to another program file. After it spreads, the virus transfers control back to the host program, which functions normally. No matter how many times a simple virus infects a new file or a floppy disk, for example, the infection always makes an exact copy of itself. Anti-virus software needs only search, or scan, for a telltale sequence of bytes known as a signature to identify the virus.

In response, virus authors began encrypting viruses. The idea was to hide the "fixed signature" by scrambling the virus code, making it unrecognizable to the virus scanner. An encrypted virus consists of a virus decryption routine and an encrypted virus body. If a user launches an infected program, the virus decryption routine first gains control of the computer, then decrypts the virus body. Next, the decryption routine transfers control of the computer to the decrypted virus.

An encrypted virus infects programs and files as any simple virus does. Each time it infects a new program, the virus makes a copy of both the decrypted virus body and its related decryption routine, encrypts the copy, and attaches both to a target. To encrypt the copy of the virus body, an encrypted virus uses an encryption key that the virus is programmed to change from infection to infection. As this key changes, the scrambling of the virus body changes, making the virus appear different from infection to infection. This makes it extremely difficult for anti-virus software to search for a virus signature extracted from a consistent virus body.

Significantly, and fortunately for anti-virus programmers, the decryption routines remain constant from generation to generation - a weakness that anti-virus software quickly used to identify these encrypted viruses. Instead of just scanning for signatures, virus scanners were modified to also search for the sequence of bytes that identified a specific decryption routine.

In retaliation, virus authors developed the polymorphic virus. Like an encrypted virus, a polymorphic virus includes a scrambled virus body and a decryption routine that first gains control of the computer, then decrypts the virus body. However, a polymorphic adds to these two components, a third, a mutation engine that generates randomized decryption routines that change each time a virus infects a new program.

With a polymorphic virus, the mutation engine and virus body are both encrypted. When a user runs a program infected with a polymorphic virus, the decryption routine first gains control of the computer, then decrypts both the virus body and the mutation engine. Next, the decryption routine transfers control of the computer to the virus, which searches for a new program to infect. At this point, the virus makes a copy of both itself, and the mutation engine in random access memory (RAM). The virus then invokes the mutation engine, which randomly generates a new decryption routine that is capable of decrypting the virus, yet bears little or no resemblance to any prior decryption routine. Next, the virus encrypts this new copy of the virus body and the mutation engine. Finally, the virus appends this new decryption routine, along with the newly encrypted virus and mutation engine, onto a new program.

Consequently, not only is the virus body encrypted, but also the virus decryption routine varies from infection to infection. This confounds a virus scanner searching for the sequence of bytes that identifies a specific decryption routine. With no fixed signature to scan for, and no fixed decryption routine, no two infections look alike.

Anti-virus researchers first fought back by creating special detection routines designed to catch each polymorphic, one by one. These special programs detect various sequences of computer code known to be used by a given mutation engine to decrypt a virus body. This approach is inherently impractical, time-consuming, costly, and always a step behind the virus creators.

Moreover, many polymorphic viruses use the same mutation engine, thanks to the virus creators that originated and shared the polymorphic mutation engine. In addition, different engines used by other polymorphic viruses often generate similar decryption routines, which makes any identification based solely on decryption routines wholly unreliable. Consequently, attempts to identify polymorphic viruses by identifying the mutation engine can lead to mistakenly identifying one polymorphic as another. These shortcomings led anti-virus researchers to develop generic decryption techniques that trick a polymorphic virus into decrypting and revealing itself.

A virus scanner that uses generic decryption relies on several behaviors to detect polymorphic viruses. Each time it scans a new program file, the virus scanner loads the file into a self-contained virtual computer created in RAM. Inside the virtual computer, program files execute as if running on a real computer. The scanner monitors and controls the program file as it executes inside the virtual computer. A polymorphic virus running inside the virtual computer can do no damage because it is isolated from the real computer. When a virus scanner loads a file infected by a polymorphic virus into the virtual computer, the virus decryption routine executes and decrypts the encrypted virus body. This exposes the virus body to the scanner, which can then search for signatures in the virus body that precisely identify the particular virus strain.

If the virus scanner loads a file that is not infected, there is not virus to expose and monitor. In response to non-virus behavior, the scanner quickly stops running the file inside the virtual computer, removes the file from the virtual computer, and proceeds to scan the next file. A key problem with generic decryption is speed. Generic decryption methods are of no practical use if it takes an inordinate length of time for the polymorphic virus to decrypt inside the virtual computer. Similarly, if generic decryption simply stops short, the virus scanner may miss a polymorphic virus before it reveals itself for the scanner to detect a signature.

To solve this problem, virus scanners often employ "heuristics," a general set of rules that helps to differentiate non-virus behavior from virus behavior. For example, a typical non-virus program uses results from mathematical computations it makes as it runs in the virtual computer. Conversely, a polymorphic virus may perform similar computations; yet throw away the results because the results are irrelevant to the virus. In fact, a polymorphic virus may perform such computations solely to look like a valid program in an attempt to elude the virus scanner.

Heuristic-based virus scanners look for such inconsistent behavior. An inconsistency increases the likelihood of some type of infection and prompts a scanner that relies on heuristic-based rules to extend the length of time a suspect file executes inside the virtual computer, giving a potentially infected file a longer length of time to decrypt itself and expose the encrypted virus. Heuristic-based virus scanners demand continual research and updating to keep up with the virus creators. Heuristic rules tuned to detect hundreds of known viruses, may miss a handful of those viruses when the heuristic rules are updated to detect newly identified viruses. In addition, as virus writers continue to make viruses look like uninfected programs, heuristic-based rules can easily balloon to the point where almost any program might share some attributes that might trigger the virus scanner to lengthen the amount of time it takes examining the file.

Moreover, virus scanners that use generic decryption techniques rely on a team of anti-virus researchers able to analyze millions of potential virus variations, extract a signature, then generate and/or modify a set of heuristics while also guarding against implications of changing heuristic rules that successfully identify known viruses. This requires extensive and exhaustive regression testing.

In response, Symantec Corporation of Cupertino, California employs a system that uses a set of non-heuristic-based rules against programs operating in a virtual computer. Symantec's system relies on virus profiles or rules that are specific to each virus versus a generic set of rules that differentiate non-virus behavior from virus behavior. When scanning a new file, Symantec's system first attempts to exclude as many viruses as possible from consideration. For example, different viruses infect different executable file formats. Some viruses infect only .COM files. Others infect only .EXE files. Some viruses infect both. Very few infect .SYS files. Consequently, as it scans an .EXE file, Symantec's system ignores polymorphic viruses that infect only .COM and .SYS files. If all viruses are eliminated from consideration, then the file is deemed infection free and is removed from the virtual computer.

If the preliminary scan does not rule out the presence of infected code within the file under observation, the Symantec system continues to run the file inside the virtual computer as long as the behavior of the file is consistent with at least one known polymorphic or mutation engine. For example, one polymorphic virus is known to perform math computations and then throw away the results. A second polymorphic may never perform such calculations. Instead, it may use specific random instructions in its decryption routine. A third polymorphic may call on the operating system as it decrypts. Symantec's system catalogs these and hundreds of other characteristics into each virus profile, one each for each polymorphic virus and mutation engine. As the Symantec virus detection system detects behaviors that are inconsistent with known virus profiles, the system excludes those known viruses from consideration. This process continues until the behavior of the program running in the virtual computer is inconsistent with the behavior of any known polymorphic or mutation engine.

Despite the advanced nature of Symantec's virus detection system, a number of "new" viruses will be resistant to detection until the virus catalog is updated in a manner that isolates and identifies the virus. Other viruses that wait for a specific trigger condition may not be detected. For example, some polymorphic viruses may be programmed to wait for the user of the program to press a specific key. This type of polymorphic virus will infect a real computer executing the virus only after a user enters the designated keystroke. If the operator fails to enter the keystroke, the virus does not get an opportunity to launch. Inside the virtual computer created by generic decryption methods and Symantec's virus detection system, the virtual program will never receive the needed keystroke.

Despite the capabilities now available to detect infected code, it can be appreciated that it would be desirable to have an improved system and method for detecting infected software code that avoids one or more of the problems identified above.

According to an aspect of the present invention there is provided a method of identifying infected program instructions as specified in claim 1.

According to another aspect of the present invention there is provided a system for detecting infected program instructions as specified in claim 5.

According to another aspect of the present invention there is provided a virus detection program as specified in claim 9.

The preferred embodiments provide systems and methods for virus checking software using a system that intercepts program instructions and applies the intercepted code in a virtual computer the first time the code is to be executed by the real computer. In one embodiment, a system and method intercept program instructions; one or more tests designed to identify infected code and/or virus like behavior are applied to the code prior to sending the code to the computer. When it is determined that a code fragment contains infected code, the infected code is not cached and consequently is prevented from operating on the real computer. Briefly described, in architecture, an improved virus checking software system can be realized with a computing device, a random access memory, a dynamic execution layer interface (DELI) residing between at least one application (*i.e*., an application under test) and computing device hardware.

The present disclosure also relates to identifying infected code within a program stored on a computer-readable medium. In one embodiment, a virus detection manager comprises logic configured to intercept program instructions, logic configured to determine if the program instructions are to be executed, and logic configured to identify if the program instructions are infected.

In addition, the present disclosure relates to a dynamic execution layer interface (DELI) residing between at least one application and computing system hardware. In one embodiment, the DELI comprises a core configured to cache and execute certain application code fragments, an application programming interface configured to provide access to caching and executing functions of the core, and a system control and configuration layer configured to provide policies for operation of the core.

Some embodiments of the system can be viewed as providing methods for detecting infected programs. In this regard, a method for virus checking a program can be summarized by the following steps: inserting a dynamic execution layer interface (DELI) between computing device hardware and program code; monitoring application code as it enters the DELI to determine if the code has been previously processed by the computing device hardware; and when it is the case that the application code has not been previously processed, analyzing the program code to determine if infected code is present.

Other systems, methods, and features associated with virus checking software will become apparent to one with skill in the art upon examination of the following drawings and detailed description. It is intended that all such additional systems, methods, and features included within this description, are within the scope of the systems and methods for virus checking software as protected by the accompanying claims.

Embodiments of the present invention are described below, by way of example only, with reference to the accompanying drawings, in which:
FIG. 1 is a block diagram illustrating an example of a dynamic execution layer interface (DELI) executing on a computer system to provide dynamic transformation services to applications and operating systems.
FIG. 2 is a block diagram of an exemplar configuration and operation of a core of the DELI shown in FIG. 1.
FIG. 3 is a block diagram of an exemplar computer system on which the DELI shown in FIG. 1 can be executed.
FIG. 4 is a functional block diagram of the virus detection manager introduced in FIG. 1.
FIG. 5 is a flow diagram that illustrates an example of the DELI shown in FIG. 1 operating in a transparent mode.
FIG. 6 is a flow diagram that illustrates an example of the DELI shown in FIG. 1 operating in a non-transparent mode.
FIG. 7 is a flow diagram that illustrates operation of the virus detection manager of FIG. 4.

Disclosed is a system and method for virus checking and executing program binaries. In accordance with preferred embodiments, a virus detection manager works together with a virtual computer formed within a computing device to isolate and identify infected application code. Once infected code is identified, the virus detection manager protects the computing device by preventing the infected code from executing on the computing device. As explained below, the nature of the virus detection methodologies can vary depending upon the particular application. By way of example, virus detection can comprise signature matching, execution code behavior monitoring, among others. DELI permits the various virus detection methodologies to be applied only to code that will be executed for the first time by the computing device hardware. Because virus detection is continuously applied only to code about to be executed for the first time, the improved virus checker is better prepared to identify and prevent execution of infected code while reducing the overhead associated with checking the entire contents of a new or modified program.

To facilitate description of the system and method, exemplary systems are discussed with reference to the figures. Although these systems are described in detail, it will be appreciated that they are provided for purposes of illustration only and that various modifications are feasible. Other exemplary systems are described in U.S. Patent Application Serial No. 09/924,260, filed August 8, 2001, entitled "Dynamic Execution Layer Interface for Explicitly and Transparently Executing Application or System Binaries". After the description of the exemplary systems, examples of operation of the systems are provided to explain the manners in which virus detection can be performed prior to executing program binaries.

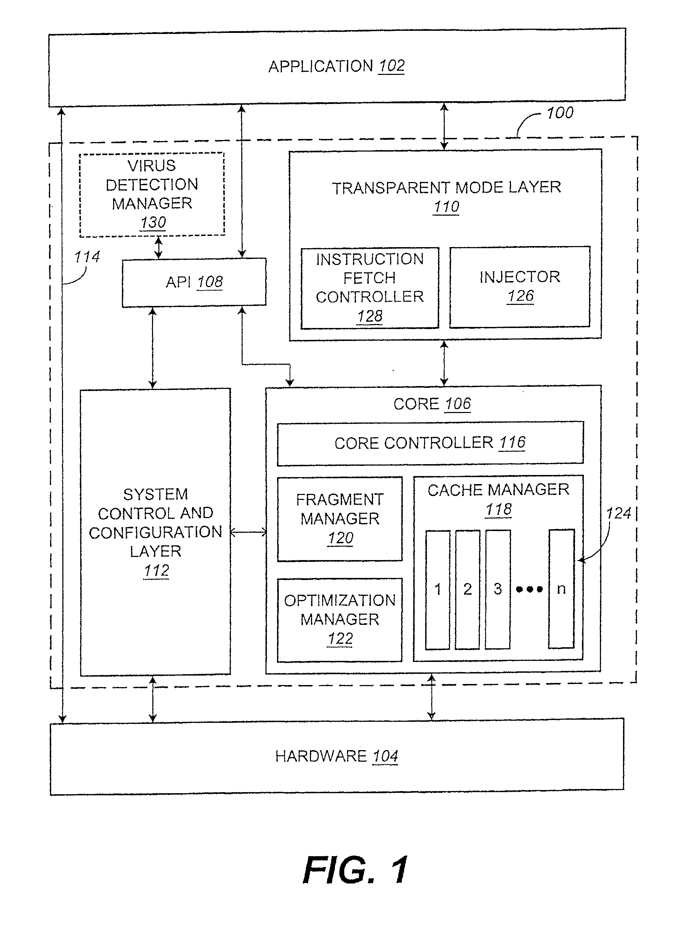

Referring now to FIG. 1, illustrated is an example dynamic execution layer interface (DELI) 100. Generally speaking, the DELI 100 comprises a generic software layer written in a high or low-level language that resides between applications, including or not including an operating system (O/S), and hardware to untie application binary code from the hardware. Through this arrangement, the DELI 100 can provide dynamic computer program code transformation, caching, and linking services which can be used in a wide variety of different applications such as emulation, dynamic translation and optimization, transparent remote code execution, re-mapping of computer system functionality for virtualized hardware environments, code decompression, code decrypting, *etc.* As is discussed in greater detail below, the DELI 100 can provide its services while operating in a transparent mode, a non-transparent mode, or combinations of the two. In the transparent mode, the DELI 100 automatically takes control of an executing program in a manner in which the executing program is unaware that it is not executing directly on computer hardware. In the non-transparent mode, the DELI 100 exports its services through an application-programming interface (API) to an application (*e.g*., the virus detection manager) to allow the application to control how the DELI 100 reacts to certain system events.

As depicted in FIG. 1, the DELI 100 resides between at least one application 102 and computer hardware 104. Depending upon the particular arrangement, the application 102 can comprise one or more user applications that are unaware of the DELI's presence and/or a client (*e.g*., an emulator) that is aware of the DELI 100 and which is configured to utilize DELI's services. More generally, however, the application 102 comprises any type of program code containing instructions to be executed by a computer processor. Where an O/S is used, the DELI 100 may reside either above or below the O/S (not indicated) depending upon the nature of the services that are provided. For example, when the DELI 100 operates above the O/S, it can only control execution of applications. If the DELI 100 operates below the O/S, however, the DELI 100 has access to an instruction stream, which can include a mix of system and user code both from the O/S and applications. The hardware 104 can comprise various different computer system components but typically at least comprises a computer processor.

The DELI 100 can include four main components including a core 106, an application-programming interface (API) 108, a transparent-mode layer 110, and a system control and configuration layer 112. Generally speaking, the core 106 exports two main services to both the API 108 and the transparent-mode layer 110. The first of these services pertains to the caching and linking of native code fragments or code fragments which correspond to the instruction set of the hardware 104. The second pertains to executing previously cached code fragments. The API 108 exports functions from the application 102 that provide access to the caching and linking services of the core 106 in the non-transparent mode of operation. The transparent mode layer 110 enables the core 106 to gain control transparently over code execution in the transparent mode of operation, as well as fetch code fragments to be cached. Finally, the system control and configuration layer 112 enables configuration of the DELI 100 by providing policies for operation of the core 106 including, for example, policies for the caching, linking, and optimizing of code. These policies can, for example, be provided to the layer 112 from the application 102 via the API 108. The system control and configuration layer 112 also controls whether the transparent mode of the DELI 100 is enabled, thus determining whether the core 106 receives input from the API 108, the transparent mode layer 110, or both.

As is further indicated in FIG. 1, the system 100 can include a bypass path 114 that can be used by the application 102 to bypass the DELI 100 so that the application can execute directly on the hardware 104, where desired. It is noted that such operation can be possible in that the DELI 100 is an optional execution layer, which may or may not be utilized.

As is shown in FIG. 1, the core 106 comprises a core controller 116, a cache manager 118, a fragment manager 120, and an optimization manager 122. The core controller 116 functions as a dispatcher that assigns tasks to the other components of the core 106 that are responsible for completing the tasks. The cache manager 118 comprises a mechanism (*e.g*., a set of algorithms) that controls the caching of the code fragments within one or more code caches 124 (*e.g*., caches 1 through n) according to the policies specified by the system control and configuration layer 112 as well as the fragment manager 120 and the optimization manager 122. The one or more code caches 124 of the core 106 can, for instance, be located in hardware caches on one or more processors of the hardware 104, or can be created in the main local memory of the hardware. Where the code cache(s) 124 is/are mapped in hardware caches onboard the processor(s), increased performance can be obtained due to reduced instruction cache refill overhead, increased memory bandwidth, *etc.* The fragment manager 120 specifies the arrangement of the code fragments within the code cache(s) 124 and the type of transformation that is imposed upon the fragments. Finally the optimization manager 122 contains the set of optimizations that can be applied to the code fragments to optimize their execution.

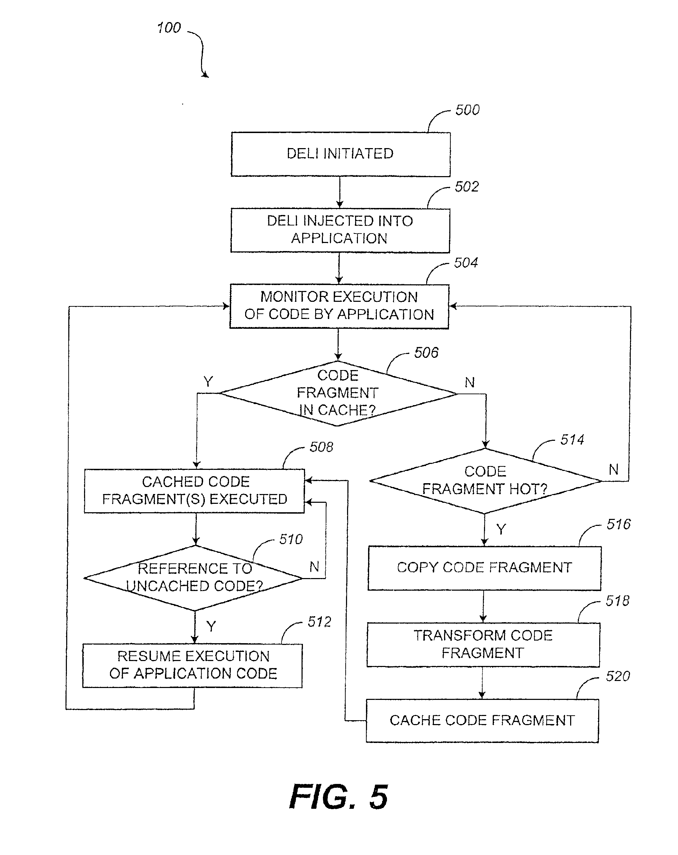

As noted above, the API 108 exports functions from the application 102 that provide access to DELI services. More specifically, the API 108 exports caching and linking services of the core 106 to the application 102, which may comprise a client that is not aware of the DELI's presence. These services exported by the API 108 enable the application 102 to control the operation of the DELI 100 in the non-transparent mode by (i) explicitly emitting code fragments to the core 106 for caching and/or by (ii) instructing the DELI 100 to execute specific code fragments out of its code cache(s) 124. In addition, the API 108 also can export functions that initialize and discontinue operation of the DELI 100. For instance, the API 108 can initiate transparent operation of the DELI 100 and further indicate when the DELI 100 is to cease such operation. The API 108 also, as mentioned above, facilitates configuration of the DELI 100 by delivering policies specified by the application 102 to the core 106 (*e.g.,* to the fragment manager 120 and/or the optimization manager 122). Use of the API 108 in facilitating operation in a non-transparent mode is described below in relation to FIG. 5.

With further reference to FIG. 1, the transparent mode layer 110 typically includes an injector 126, which is used to gain control over a running application 102 transparently. When the DELI 100 operates in a completely transparent mode (*i.e*., where the application is unaware of the DELI's presence) the injector 126 is used to inject the DELI 100 into the application 102 before the application begins execution so that the application can be run under DELI control. In such circumstances, the DELI 100 avoids modifying the application's 102 executable image to avoid impeding exception handling. Control can be gained by the injector 126 in several different ways, each of which loads the application binaries without changing the virtual address at which the binaries are loaded. By way of example, the O/S kernel loader can be modified, such that the DELI 100 (*e.g*., compiled as a shared library) is automatically loaded by the kernel loader when it loads the application's executable image. Alternatively, a user level loader can be used to leverage the kernel loader without modifying it to load the application 102 in memory in suspended mode and later inject instructions into the application (*e.g*., on the application stack) that will load the DELI 100 shared library later when the application is resumed.

In another alternative, *ptrace* can be used to attach the DELI 100 to the application 102. As is known in the art, *ptrace* is a mechanism often used by debuggers that allows one process to control another. The DELI 100 can be configured as a separate process that attaches to the application 102 via *ptrace*, and runs the application until the point where the execution start-up code at the top of the application's binary image (*e.g*., *crt0*) is about to call the application's entry point. Execution of the application 102 can then be suspended, and the DELI 100 can be used to fetch the application instructions and execute them on its behalf.

In yet another alternative, the application's text segment can be expanded in a separate copy of the executable file. In particular, the application's binary image can be copied to a temporary location, the application's text segment extended by adding a DELI text segment at the end, and the start symbol (*i.e*., the entry point that is called by *crt0*) changed to the DELI entry point. The resulting executable file can then be executed using *exec.* The original application's text segment is still loaded at the same virtual address that it would normally have been loaded, but the DELI 100 will gain control before the actual application 102 starts.

In another example, the DELI 100 can gain control over the application 102 using a special version of *crt0.* As is known in the art, the *crt0* code is responsible for picking up the command line arguments, setting up the initial stack and data segment, and then making a call to the value of the start symbol (usually the main( ) function of the application 102). Prior to calling the application entry point, *crt0* maps the dynamic link loader *dld*, which then loads any dynamically linked libraries (DLLs) referenced by the application 102. A custom version of *crt0* can be used to additionally map the DELI code (itself compiled as a DLL), and call the DELI's entry point instead of the one defined by the start symbol.

Irrespective of the manner in which control is obtained over the application 102, an instruction fetch controller 128 can then be used to extract (*i.e*., fetch) copies of fragments (*e.g*., traces) of the application binary code, pass them to the DELI core 106 for caching, and direct the core 106 to execute the appropriate cached copies out of its code cache(s) 124. Use of the transparent mode layer 110 in facilitating such operation is described below in relation to FIG. 5.

It is to be noted that, although the DELI 100 has been shown and described herein as including the transparent mode layer 110, persons having ordinary skill in the art will appreciate from this disclosure taken as a whole that this layer may be omitted altogether where operation of the DELI 100 is solely controlled by the application 102 (*i.e*., client) via the API 108.

As noted above, the system control and configuration layer 112 enables configuration of the DELI 100 by providing policies for the caching and linking of code. Although the DELI 100 is not limited to any particular type of policy or policy content, the policies typically determine how the DELI 100 will behave. For instance, the layer 112 may provide policies as to how fragments of code are extracted from the application 102, how fragments are created from the original code, how multiple code fragments can be linked together to form larger code fragments, *etc.* The layer's policies can be static or dynamic. In the former case, the policies can be hard coded into the DELI 100, fixing the configuration at build time. In the latter case, the policies can be dynamically provided by the application 102 through function calls in the API 108. Implementation of the policies controls the manner in which the DELI 100 reacts to specific system and/or hardware events (*e.g*., exceptions and interrupts). In addition to the policies noted above, the system control and configuration layer 112 can specify the size of the code cache(s) 124, whether a log file is created, whether code fragments should be optimized, *etc.*

The system control and configuration layer 112 further supports the abstraction of system and hardware functionality by intercepting instructions in the application binary code directed at system and hardware functionality. These instructions are then replaced by the fragment manager 120 under the direction of the system control and configuration layer 112 as part of the fragment formation process. The system control and configuration layer 112 identifies instructions directed at missing or defective hardware and causes the fragment manager 120 to replace them with corresponding instructions directed at similar, but different, hardware 104 or with software simulations of the original hardware.

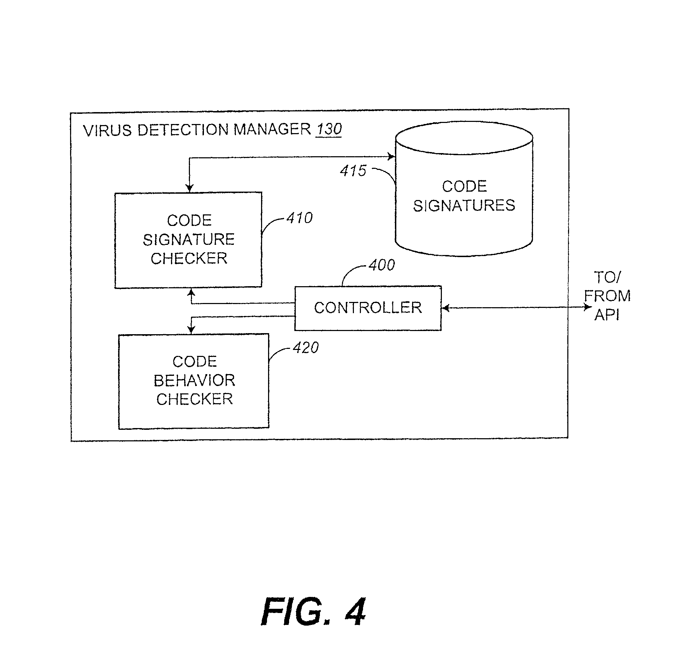

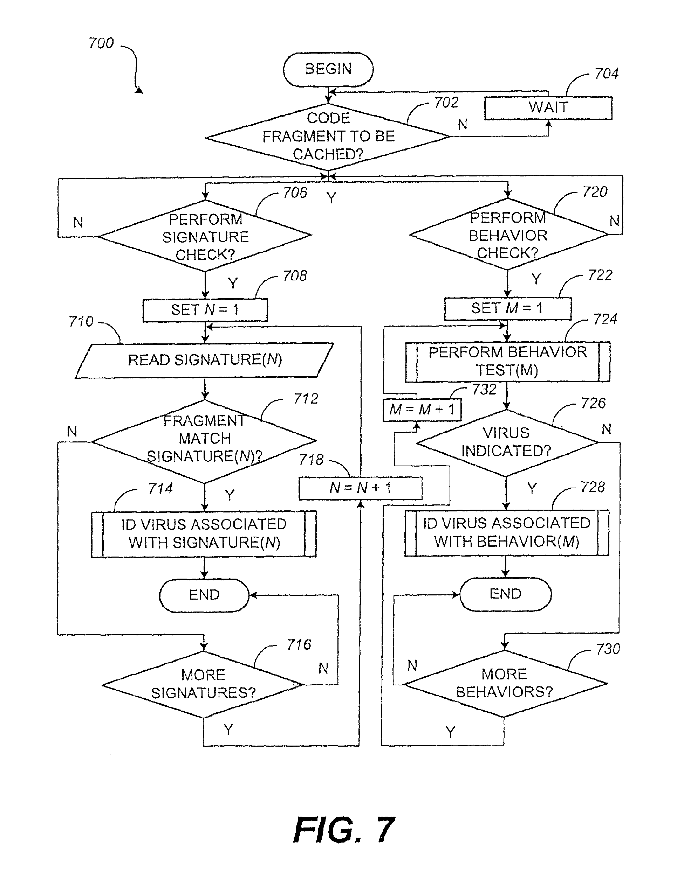

In addition to the above-identified components, the DELI 100 can, optionally, further include a virus detection manager 130 that, for instance, comprises one or more algorithms responsible for identifying infected application code binaries in some manner. For example, the virus detection manager 130 can provide a signature checker that can be applied to code originating in the application 102. The virus detection manager 130 is further illustrated and described with reference to the functional block diagram of FIG. 4. Use of the virus detection manager 130, where provided, is described below with reference to FIG. 7.

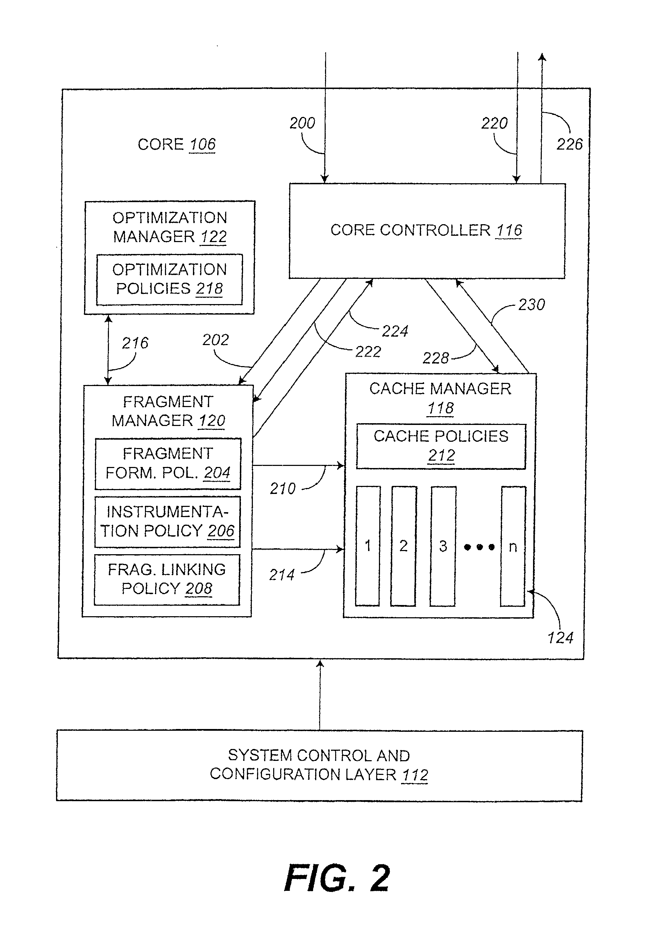

FIG. 2 illustrates an exemplar configuration of the core 106 and its operation. As indicated in this figure, the core 106 accepts two types of requests from the API 108 or the transparent mode layer 110. First, requests 200 can be accepted for caching and linking a code fragment through a function interface. Such a request can comprise a function in the form of, for instance, "DELI_emit_fragment(tag, fragbuf)." This function receives a code fragment as its parameters and an identifier (*e.g*., a tag) to store in the DELI cache(s) 124. In addition, the core 106 accepts requests for initiating execution at a specific code fragment tag through a function interface such as "DELI_execute_fragment(tag)," which identifies a code fragment stored in the cache(s) 124 to pass to the hardware 104 for execution.

The core controller 116 processes these requests and dispatches them to the appropriate core module. A request 202 to emit a code fragment with a given identifier can then be passed to the fragment manager 120. The fragment manager 120 transforms the code fragment according to its fragment formation policy 204, possibly instruments the code fragment according to its instrumentation policy 206, and links the code fragment together with previously cached fragments according to its fragment linking policy 208. For example, the fragment manager 120 may link multiple code fragments in the cache(s) 124, so that execution jumps to another code fragment at the end of executing a code fragment, thereby increasing the length of execution from the cache(s). To accomplish this, the fragment manager 120 issues fragment allocation instructions 210 to the cache manager 118. The fragment manager 120 then sends a request to the cache manager 118 to allocate the processed code fragment in the code cache(s) 124.

The cache manager 118 controls the allocation of the code fragments and typically is equipped with its own cache policies 212 for managing the cache space. However, the fragment manager 120 may also issue specific fragment de-allocation instructions 214 to the cache manager 118. For example, the fragment manager 120 may decide to integrate the current fragment with a previously allocated fragment, in which case the previous fragment may need to be de-allocated. In some arrangements, the cache manager 118 and fragment manager 120 can manage the code cache(s) 124 and code fragments in the manner shown and described in U.S. Patent No. 6,237,065, issued May 22, 2001, entitled "A Preemptive Replacement Strategy for a Caching Dynamic Translator Based on Changes in the Translation Rate". Alternatively, management of the code cache(s) 124 and code fragments may be performed in the manner shown and described in U.S. Patent Application Serial No. 09/755,389, filed January 5, 2001, entitled "A Partitioned Code Cache Organization to Exploit Program Locality".

Prior to passing a fragment to the cache manager 118, the fragment manager 120 may pass the fragment to the optimization manager 122 to improve the quality of the code fragment according to its optimization policies 218. In some arrangements, the optimization manager 122 may optimize code fragments in the manner shown and described in U.S. Patent Application Serial No. 09/755,381, filed January 5, 2001, entitled "A Fast Runtime Scheme for Removing Dead Code Across Linked Fragments". Alternatively, the optimization manager 122 may optimize code fragments in the manner shown and described in U.S. Patent Application Serial No. 09/755,774, filed January 5, 2001, entitled "A Memory Disambiguation Scheme for Partially Redundant Load Removal". Notably, the optimization manager 122 may also optimize code fragments using classical compiler optimization techniques, such as elimination of redundant computations, elimination of redundant memory accesses, in-lining functions to remove procedure call/return overhead, *etc.*

As mentioned above, the fragment manager 120 transforms the code fragment according to its fragment formation policy 204. The transformations performed by the fragment manager 120 can include code relocation by, for instance, changing memory address references by modifying relative addresses, branch addresses, *etc.* The layout of code fragments may also be modified, changing the physical layout of the code without changing its functionality (*i.e*., semantic). These transformations are performed by the fragment manager 120 on fragments received through the API 108 and from the instruction fetch controller 128.

To perform code instrumentation, the fragment manager 120 gathers data according to the instrumentation policy 206 for code profiling, such as data on the frequency of execution of code fragments, the frequency with which a memory address is accessed, *etc.* Program counters can be used to collect these statistics in order to facilitate fragment formation or de-allocation. These policies are configured by the system control and configuration layer 112, which receives policy instructions sent either through the API 108 or established at DELI build time. The policies may comprise options for different ways to create, instrument, optimize, and link fragments, or the policies may simply be hard coded algorithms in the DELI 100 for performing these tasks.

The second type of request accepted by the DELI core 106 is a request 220 to execute a fragment identified by a given identifier (*e.g*., tag). In such a case, the core controller 116 issues a lookup request 222 to the fragment manager 120, which returns a corresponding code cache address 224 if the fragment is currently resident and active in the cache(s) 124. By way of example, the fragment manager 120 can maintain a lookup table of resident and active code fragments in which a tag can be used to identify the location of a code fragment. Alternatively, the fragment manager 120 or cache manager 118 can use any other suitable technique for tracking whether code fragments are resident and active. If the fragment is not currently resident and active in the cache(s) 124, the fragment manager 120 returns an error code to the core controller 116, which returns the fragment tag back to the initial requester as a cache miss address. If, on the other hand, the fragment is currently resident and active, the core controller 116 then patches the initial request to the cache manager 118 along with its cache address. The cache manager 118, in turn, transfers control to the addressed code fragment in its code cache(s) 124, thus executing the addressed code fragment. Execution then remains focused in the code cache(s) 124 until a cache miss occurs, *i.e*., until a copy for the next application address to be executed is not currently resident in the cache(s). This condition can be detected, for instance, by an attempt of the code being executed to escape from the code cache(s) 124. A cache miss is reported from the cache manager 118 to the core controller 116 and, in turn, back to the initial requester.

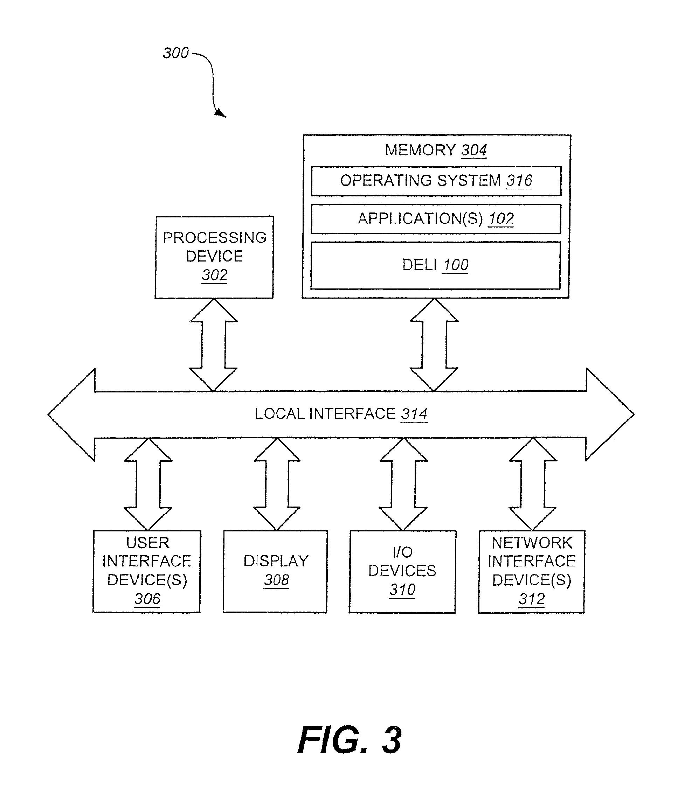

FIG. 3 is a schematic view illustrating exemplar architecture for a computer system 300 on which the DELI 100 can execute. Generally speaking, the computer system 300 can comprise any one of a wide variety of wired and/or wireless computing devices, such as a desktop computer, portable computer, dedicated server computer, multi-processor computing device, cellular telephone, personal digital assistant (PDA), handheld or pen-based computer, and so forth. Irrespective of its specific arrangement, the computer system 300 can, for instance, comprise a processing device 302, memory 304, one or more user interface devices 306, a display 308, one or more input/output (I/O) devices 310, and one or more network interface devices 312, each of which is connected via a local interface 314.

The processing device 302 can include any custom made or commercially available processor, a central processing unit (CPU) or an auxiliary processor among several processors associated with the computer system 300, a semiconductor based microprocessor (in the form of a microchip), a macro-processor, one or more application-specific integrated circuits (ASICs), a plurality of suitably configured digital logic gates, and other well known electrical configurations comprising discrete elements both individually and in various combinations to coordinate the overall operation of the computer system 300.

The memory 304 can include any one of a combination of volatile memory elements (*e.g*., random access memory (RAM, such as DRAM, SRAM, *etc.*)) and non-volatile memory elements (*e.g*., ROM, hard drive, tape, CDROM, *etc.*). The memory 304 typically comprises an O/S 316, one or more applications 102 (*e.g*., user applications and/or clients), and the DELI 100, which has already been described in detail. Persons having ordinary skill in the art will appreciate that the memory 304 can, and typically will, comprise other components, which have been omitted for purposes of brevity.

The one or more user interface devices 306 comprise those components with which the user can interact with the computer system 300. For example, where the computer system 300 comprises a personal computer (PC), these components can comprise a keyboard and mouse. Where the computer system 300 comprises a handheld device (*e.g*., a PDA or a mobile telephone), these components can comprise function keys or buttons, a touch-sensitive screen, a stylus, *etc.* The display 308 can comprise a computer monitor or plasma screen for a PC or a liquid crystal display (LCD) for a handheld device.

With further reference to FIG. 3, the one or more I/O devices 310 are adapted to facilitate connection of the computer system 300 to another system and/or device and may therefore include one or more serial, parallel, small computer system interface (SCSI), universal serial bus (USB), IEEE 1394 (*e.g*., Firewire™), and/or personal area network (PAN) components. The network interface devices 312 comprise the various components used to transmit and/or receive data over a network. By way of example, the network interface devices 312 include a device that can communicate both inputs and outputs, for instance, a modulator/demodulator (*e.g*., a modem), wireless (*e.g*., a radio-frequency (RF)) transceiver, a telephonic interface, a bridge, a router, a network card, *etc.*

Various software and/or firmware has been described herein. It is to be understood that this software and/or firmware can be stored on any computer-readable medium for use by or in connection with any computer-related system or method. In the context of this document, a computer-readable medium denotes an electronic, magnetic, optical, or other physical device or means that can contain or store a computer program for use by or in connection with a computer-related system or method. These programs can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device.

The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium include an electrical connection having one or more wires, a portable computer diskette, a random access memory (RAM), a read-only memory (ROM), an erasable programmable read-only memory (EPROM), an electrically erasable programmable read-only memory (EEPROM), or Flash memory, an optical fiber, and a portable compact disc read-only memory (CDROM). Note that the computer-readable medium can even be paper or another suitable medium upon which a program is printed, as the program can be electronically captured, via for instance, optical scanning of the paper or other medium, then compiled, interpreted or otherwise processed in a suitable manner as necessary, and then stored in a computer memory.

Reference is now directed to the functional block diagram of FIG. 4. The virus detection manager 130 as illustrated in FIG. 4 may be realized in the memory 304 of the computer system 300 and may comprise a controller 400, a code signature detector 410, a code signature database 415, and a code behavior checker 420. As illustrated in FIG. 4, the controller 400 receives an indication of the contents of code fragments about to be emitted into the cache 124 each time new fragments are emitted. In this way, the virus detection manager 130 checks only those portions of code that will be executed, thus greatly increasing the efficiency of testing software for infected code.

Thereafter, the controller 400 may forward the contents of such code fragments to be emitted into the code cache to one or more virus detection engines (*e.g*., the code signature checker 410, the code behavior checker 420, among others (not illustrated)). For example, the virus detection manager 130 may scan for simple known viruses by storing a known signature associated with a virus in the code signatures database 415 and comparing the contents of the cache 124 with the stored signatures. When it is the case that the code signature checker 410 of the virus detection manager 130 identifies a signature match with a stored signature of a known virus, the controller 400 may send one or more commands to the DELI 100 to prevent the transfer of the infected fragment to the code cache and thus prevent it from being executed on the computer hardware 104.

Other testing methods may be applied by the virus detection manager 130 instead of or in addition to the virus signature comparison described above. For example, the code behavior checker 420 may be configured to apply heuristic-based rules to the contents of a code fragment in order to determine if the code fragment contains executable statements in common with known viruses. The code behavior checker 420 may also apply one or more checks to identify known mutation engines. Furthermore, the code behavior checker 420 may apply a set of rules specific to a plurality of known viruses.

Moreover, the code behavior checker 420 may be programmed to look for program activity indicative of common virus attacks. For example, the code behavior checker 420 may be programmed to monitor and warn of stack overruns, known backdoor methods designed to bypass security and operating system protections. Importantly, all programs designated for execution by the computer system 300 can be intercepted and processed by the virus detection manager 400. In this way, worms and other background applications of which a user of the computer system 300 may be unaware may be screened for the presence of infected code.

The virus detection manager 400 together with the DELI 100 present an arrangement that is advantageously positioned to intercept infected code. When the computer system 300 encounters an application 102 that contains an encrypted virus, the DELI 100, as previously described, loads newly decrypted executable code fragments about to be emitted into the cache 124 for analysis by the virus detection manager 400. Only after the virus detection manager 400 has confinned that the executable code fragment is infection free, does the DELI 100 emit the code fragment into the cache 124.

Because the virus detection manager 400 deals only with decrypted executable code and because the virus detection manager 400 checks (*i.e*., tests) each executable portion of code only the first time that a particular version of a program is executed on the computer system 300, the system and method for virus checking software is particularly effective and efficient at intercepting infected code. A computer system 300 using the DELI 100 and practicing the virus detection methodologies presented herein is particularly well protected from infected code that is triggered to decrypt upon execution of a triggering event (*e.g*., a keystroke or series of keystrokes) or after the passage of a particular date or time.

The general nature of the virus detection manager 400 and the DELI 100 having been described above, examples of operation of the DELI 100 will now be discussed with reference to FIGs. 5 through 7. As identified above, the DELI 100 operates in two general operating modes, *i.e*., a transparent mode and a non-transparent mode, as well as combinations thereof. In describing operation in these modes, flow diagrams are provided. It is to be understood that any process steps or blocks in these flow diagrams represent modules, segments, or portions of code that include one or more executable instructions for implementing specific logical functions or steps in the process. It will be appreciated that, although particular process steps are described, alternative implementations are feasible. Moreover, steps may be executed out of order from that shown or discussed, including substantially concurrently or in reverse order, depending on the functionality involved.

Generally speaking, irrespective of whether the DELI 100 has gained control over the execution of the application 102 transparently or non-transparently, the application does not execute directly on the hardware 104. Rather, application code executes through the DELI 100 in the form of code fragment that may be maintained in the code cache(s) 124.

FIG. 5 illustrates a simple example of DELI operation in the transparent mode. More particularly, FIG. 5 illustrates DELI operation in a completely transparent mode in which the application 102 is unaware of the DELI's presence. Beginning with block 500, the DELI 100 is first initiated. When operating in the transparent mode, this initiation can result from initiation of the application 102. Upon its initiation, the DELI 100 is injected into the application 102 with the injector 126 of the transparent mode layer 110, as indicated in block 502, such that the DELI gains control over the application and its execution. As noted above, there are various different methods in which this control can be gained.

Once the DELI 100 has control over the application 102, the DELI can be used to provide any one of several different services such as those noted above. For instance, the DELI 100 can facilitate hardware and/or software emulation, dynamic translation and optimization, transparent remote code execution, re-mapping of computer system functionality for virtualized hardware environments, code decompression, code decryption, virus detection, *etc*. These different services each involve the caching and the linking of program code fragments within the code cache(s) 124. By caching certain fragments of code copied from the application binaries and transforming them in some manner, the desired services can be provided by later executing the transformed code from the code cache(s) 124.

Before caching code, the DELI 100 must determine which particular fragments of code to cache. In that, when operating in the completely transparent mode, the application 102 is unaware of the DELI 100, the DELI 100 does not receive guidance from the application 102 as to which code fragments to cache. Although the caching of code can be dictated through the policies created at the DELI build time, more preferably, the DELI 100 has the capability to, at least in part, make these determinations on its own. The DELI 100 can do this by monitoring the execution of code by the application 102, as indicated in block 504. In so doing, the DELI 100 can collect information as to, for instance, which code fragments are most useful to the application 102 by, for example, determining which fragments are most frequently used.

As the various code fragments are executed by the application 102 under the control of the DELI 100, the DELI 100 "sees" each piece of code that is executed. Through the monitoring process, the DELI 100 can, therefore, determine which code fragments are used most frequently. The DELI 100 can then make the determination of which pieces of code are "hot," *i.e*., most important to application execution with reference to the policies that are provided by the system control and configuration layer 112. As noted above, this determination can be made using program counters that track execution instances. Persons having ordinary skill in the art will appreciate that various other methods can be used to make the determination of which pieces of code are "hot." Examples of the manner in which this determination can be made are described in U.S. Patent Application Serial No. 09/186,945, filed November 5, 1998, entitled "Method for Selecting Active Code Traces for Translation in a Caching Dynamic Translator," and U.S. Patent Application Serial No. 09/312,296, filed May 14, 1999, entitled "Low Overhead Speculative Selection of Hot Traces in a Caching Dynamic Translator".

With further reference to FIG. 5, as each code fragment is executed, the DELI 100 can determine whether an associated code fragment has previously been cached, as indicated in decision element 506. If so, the DELI 100 jumps to the code cache(s) 124 that contains the cached (and typically transformed) code and this code is executed by the hardware 104 in lieu of the original application code, as indicated in block 508. The determination of whether the code has been cached can be made with reference to, as noted above, identifiers (*e.g*., tags) that identify the association between native application code and analogues that have been cached within the code cache(s) 124. Execution of the cached code then continues, including the execution of linked fragments of code that reside in the code cache(s) 124, until such time when a reference to code that has not been cached (*i.e*., a cache miss) is encountered. With reference to decision element 510, if a reference to un-cached code is encountered, the DELI 100 jumps back to the application code and the execution of that code is
resumed, as indicated in block 512. At this time, the DELI 100 can resume monitoring of this execution (block 504).

Returning to decision element 506, if the DELI 100 determines that an associated code fragment does not reside in the code cache(s) 124, flow continues to decision element 514 where it is determined whether the code fragment is "hot" with reference to a predetermined policy. If the code is not "hot," flow returns to block 504 at which monitoring of the application code execution continues. If, on the other hand, the code is "hot," the code fragment is copied, as indicated in block 516, by fetching the fragment using the instruction fetch controller 128 of the transparent mode layer 110. An extreme example of such a predetermined policy 514 is to consider all fragments hot, in such a case, code fragments are monitored (block 514) only once before being emitted into the code cache 124.

At this point, the code fragment can be transformed in some manner, as indicated in block 518. In addition, code fragments within the cache(s) 124 can be linked according to the policies that have been established for code linking. The nature of the code transformation depends upon the type of services that the DELI 100 is to provide. For example, where the DELI 100 is to merely optimize the application execution, this transformation can comprise rearranging and/or reconfiguring the code for better performance. Irrespective of the nature of the transformation provided, the code structure is modified in a way without modifying the underlying semantic. Once the code fragment has been transformed, the transformed code can be cached within the code cache(s) 124, as indicated in block 520, and executed within the DELI 100 with flow continuing to block 508 described above.

As noted above, the DELI 100 operates differently in the non-transparent mode. Generally speaking, when operating in the non-transparent mode, the DELI 100 may operate, for example, as a DLL or a statically linked module, which exports functions in the API 108 that the application 102 can access. In the non-transparent mode, the application 102 (*i.e*., a client) is aware of the DELI 100 and is configured to utilize the DELI's services. In the simplest case, the client (*e.g*., an emulator) controls every aspect of DELI operation through the API 108. In such a case, the DELI 100 can be utilized to cache, link, and optimize code according to explicit instructions provided by the client via the API 108. For instance, the DELI 100 can be instructed to cache certain code fragments believed to be most frequently used during application execution. This can be accomplished by, for instance, providing the location of the code to the DELI 100 by identifying a tag. In such a case, the DELI 100 does not monitor but instead records code fragments as commanded by the API 108. In addition, the client can instruct the DELI 100 as to which cached fragments to execute via the API 108 by identifying the applicable tags to the DELI 100.

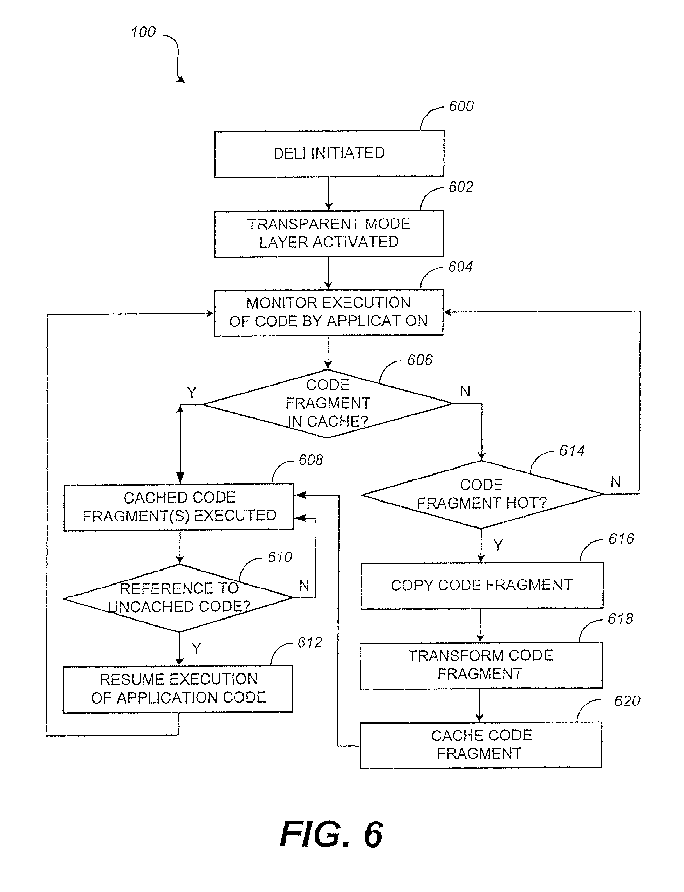

In a more typical scenario, however, the client calls upon the DELI 100 to provide its services in a transparent manner. In such a case, the client invokes operation of the DELI 100, as well as provides instructions as to when the DELI is to halt its operation. FIG. 6 provides an example of operation in this manner.

Beginning with block 600, DELI 100 is initiated. In the non-transparent mode, this initiation occurs when a start command such as "DELI_START" is delivered by the API 108 that invokes the DELI 100. Once initiated, the transparent mode layer 110 can be activated, as indicated in block 602, and flow can continue in similar manner to the transparent mode described above in relation to FIG. 5. Accordingly, the DELI 100 can monitor the execution of code by the application 604, determine whether a code fragment has been previously cached 606, execute cached code where applicable 608, copy "hot" code fragments 616, transform the copied code fragments 618, and cache transformed code fragments 620. Operation of the DELI 100 continues in this manner until the DELI 100 encounters a condition, which as required by the client, causes the DELI 100 to halt operation. By way of example, this interruption can be effected with a "DELI_STOP" command placed at the end of a function call sent to the DELI 100 via the API 108.

As noted above, the DELI 100 can be used to facilitate virus checking of program binaries. For example, the DELI 100 can be used to decompress and execute compressed program code in a virtual computer. As described above, there are several problems with current virus checking methodologies including, for example, virus checkers are only run periodically over application programs; virus checkers may not run long enough (in a virtual machine) to detect virus like program behaviors; and virus checkers do not apply various trigger conditions, among others. Consequently, virus checkers could miss an infected program entirely by failing to check the program or by failing to trigger the decryption engine within the virus. These problems can be avoided, however, when the DELI 100 is used in combination with the virus detection manager 130 described above. Because the DELI 100 controls very small portions of code such as code fragments and even individual instructions, the DELI 100 is well situated to expose infected code.

One example of operation of the DELI 100 in intercepting and executing application binaries is shown in FIG. 7. In this example, the virus detection services are provided in the transparent mode of operation. As illustrated in FIG. 7, a method for identifying infected code 700 may begin with the query of step 702, where a determination is made whether an executable code fragment is designated for transfer to the cache 124 (FIG. 1). When it is the case that the cache 124 is not about to receive an executable code fragment as indicated by the negative response arrow exiting the query of step 702, the virus detection manager 130 may be programmed to wait as illustrated in step 704. Those skilled in the art will appreciate that the DELI 100 may be configured to communicate internally with the controller 400 of the virus detection manager 130 via the API 108 to inform the controller 400 when code fragments are designated for transfer to the cache 124. Alternatively, the virus detection manager 130 may be programmed to wait a designated amount of time or for some other event before returning to the query of step 702.

When it is the case that the DELI 100 has indicated that an executable code fragment is designated for transfer to the cache 124 as indicated by the affirmative response arrow exiting the query of step 702, the controller 400 of the virus detection manager 130 may be programmed to perform one or more virus detection methods as illustrated in the exemplar branches of FIG. 7. It is important to note that the flowchart of FIG. 7 illustrates two exemplar methods for detecting infected code. Other methods previously described above, as well as methods devised to take advantage of the DELI 100 may also be applied by a suitably configured virus detection manager 130 in order to scan executable application code prior to forwarding the code to the computer hardware 104 (FIG. 1).

In a first method illustrated in the left most processing branch of the flowchart of FIG. 7, the virus detection manager 130 of the computer system 300 may be programmed to perform a signature check of the code to be cached (see block 504 of FIG. 5) or executed if not hot yet (before block 516 of FIG. 5) for known virus signatures. Depending on the predetermined policy 514 (FIG. 5) and 614 (FIG. 6), the signature check will be done only the first time the code is executed (if all fragments are considered hot), or a small number of times (before the fragment becomes hot). In a second method illustrated in the right most processing branch of the flowchart of FIG. 7, the virus detection manager 130 of the computer system 300 may be programmed to analyze operation of the code to be cached in the DELI 100 to determine if the code fragment behaves in a manner consistent with known viruses. The code fragment behavior method of the right most processing branch may be coupled with the occurrence of certain events in addition to the emission of code fragments from the DELI 100 to the cache 124. For example, system calls, stack overruns, among others may be generated either by the DELI 100 or by instrumenting the code fragments to obtain the desired detection (e.g., check the stack pointer upon return from a function call).

As illustrated by the query of step 706, the virus detection manager 130 may be programmed to check whether it should continue with a signature check. It will be appreciated that the virus detection manager 130 may be configured to read an external set of flags or other indicators that may be configured to define one or more associated methodologies to apply in making the determination if the code fragment contains a virus. When the response to the query of step 706 is affirmative (*i.e*., the virus detection manager is to perform a signature comparison of the code fragment with a set of known virus signatures), the virus detection manager 130 may be programmed to proceed with step 708 where a counter is set. Otherwise, when the signature comparison check is not desired, the virus detection manager 130 may be configured to determine which virus detection methods are desired as indicated by the negative response arrow that exits the query of step 706.

Next, as indicated in step 710, the virus detection manager 130 may be programmed to read the next signature from a virus signatures database 415 (FIG. 4) that contains known signatures present in viruses. After reading the signature in step 710, the virus detection manager 130 can compare the contents of the code fragment with the signature. When the code fragment contains bytes which match the present signature as indicated by an affirmative response from the query of step 712, the virus detection manager 130 may identify the virus as indicated in step 714 and terminate the virus detection process. Those skilled in the art will appreciate that the DELI 100 can be provided a control signal from the virus detection manager 130 commanding the DELI 100 to clear the code fragment and terminate the application 102 (FIG. 1). When it is the case that the code fragment does not contain a set of bytes that match the present signature, as indicated by the negative response arrow that exits the query of step 712, the virus detection manager 130 may be programmed to check if further signatures are available as illustrated in the query of step 716. When no further signatures are available, the method for identifying infected code 700 may terminate as shown in FIG. 7. Otherwise, the counter set in step 708 may be incremented as indicated in step 718 and steps 710 through 718 may be repeated until all known and stored virus signatures have been compared with the code fragment. It will be appreciated that once the signature comparison branch of the method for identifying infected code 700 has completed a flag may be set to indicate that the test has completed. A second flag may be set to indicate that the code fragment is clear of known virus signatures.

Thereafter, and/or substantially simultaneous with the signature comparison branch (*i.e*., the left-most branch of the flowchart) the virus detection manager 130 may be programmed to perform one or more behavior tests by monitoring operation of code fragment. As illustrated by the query of step 720, the virus detection manager 130 may be programmed to check whether it should continue with a code behavior check. When the response to the query of step 720 is affirmative (*i.e*., the virus detection manager is to perform one or more code behavior tests on the code fragment), the virus detection manager 130 may be programmed to proceed with step 722 where a counter is set. Otherwise, when the signature comparison check is not desired, the virus detection manager 130 may be configured to determine which virus detection methods are desired as indicated by the negative response arrow that exits the query of step 720.

Next, as indicated in step 724, the virus detection manager 130 may be programmed to perform a previously stored code behavior test configured to isolate and identify known viruses and/or known modes of attack commonly used by viruses and other infected code. After performing the various operations on the code fragment as indicated by the present code behavior test, which as described above may be coupled with one or more event detectors, the virus detection manager 130 can make a determination whether the code fragment is acting like one or more known viruses as illustrated in the query of step 726. When the code fragment behaves like one or more known viruses as indicated by an affirmative response from the query of step 726, the virus detection manager 130 may identify the virus as indicated in step 728 and terminate the virus detection process.

As described above with reference to the signature comparison virus detection mode, the DELI 100 can be provided a control signal from the virus detection manager 130 commanding the DELI 100 to clear the code fragment and terminate the application 102 (FIG. 1). When it is the case that the code fragment is not indicative of behavior consistent with the present behavior test as illustrated by the negative flow control arrow that exits the query of step 726, the DELI 100 may be programmed to restore the code fragment to its initial condition (not shown) before performing the query of step 730. When it is the case that no further behavior tests are to be performed, the method for identifying infected code 700 may terminate as shown in FIG. 7. Otherwise, the counter set in step 722 may be incremented as indicated in step 732 and steps 724 through 732 may be repeated until all designated code behavior tests have been completed and the results analyzed. It will be appreciated that once the behavior test branch of the method for identifying infected code 700 has completed a flag may be set to indicate that the test has completed. A second flag may be set to indicate that the code fragment is clear of known virus behaviors.

While the method for identifying infected code 700 illustrated and described in reference to the flow diagram of FIG. 7 is reflective of parallel processing of the signature comparison and code behavior virus detection methodologies, it should be appreciated that the system for virus checking software may be configured to apply these and other tests in a serial fashion when it is the case that virtual computing resources (*i.e*., memory and registers) are limited. Furthermore, while particular embodiments of the invention have been disclosed in detail in the foregoing description and drawings for purposes of example, it will be understood by those skilled in the art that variations and modifications thereof can be made without departing from the scope of the following claims. For instance, although the DELI 100 has been described above as only providing virus-detecting services, it is to be noted that various other services can simultaneously be provided by the DELI 100. For instance, the virus detecting services provided by the DELI 100 can be utilized when performing other tasks including, for instance,
hardware or software emulation that is facilitated by the client. The present disclosure is intended to include such applications.

The disclosures in United States patent application No. 09/997,454, from which this application claims priority, and in the abstract accompanying this application are incorporated herein by reference.

## Claims

1. A method of identifying infected program instructions, including the steps of:
inserting a dynamic execution layer interface (DELI) (100) between computing device hardware (104) and the program instructions (102);
monitoring the program instructions (102) as they enter the DELI (100) to determine if the code has been previously processed by the computing device hardware (104); and, when the program instructions (102) have no been previously processed, analyzing the program instructions (102) to determine if program instructions (102) are infected.

2. A method as in claim 1, wherein the step of analyzing the program instructions includes inserting decrypted program instructions (102) into a virus detection manager (130).

3. A method as in claim 2, wherein the step of analyzing the program instructions includes applying a plurality of tests (712, 724) on the content of the code fragments in a virtual computing device.

4. A method as in claim 1, 2 or 3, including the step of processing the released program instructions in computer hardware (104).

5. A system for detecting infected program instructions in active software applications, including:
means for intercepting program instructions (110);
means for determining when the intercepted program instructions have not been previously processed by the computing device (128); and
means for analyzing the intercepted program instructions (130) that have not been previously processed by the computing device prior to forwarding the intercepted program instructions to computer hardware (104).

6. A system as in claim 5, wherein the means for intercepting includes a dynamic execution layer interface (DELI) (100).

7. A system as in claim 5 or 6, wherein the means for analyzing the intercepted program instructions includes a virus detection manager (130).

8. A system as in claim 7, wherein the virus detection manager (130) includes a controller (400) configured to apply a plurality of virus detection tests (410, 420) over the contents of the intercepted program instructions (102).

9. A virus detection program stored on a computer-readable medium, including:
logic configured to intercept program instructions (110);
logic configured to determine if the intercepted program instructions have not been processed by a computing device (128); and
logic configured to determine (130) when the intercepted program instructions (102) that have not been processed by the computing device (104) are infected with a virus.

10. A program as in claim 9, including logic configured to forward (116) non-infected intercepted program instructions (102) to the computing device (104).
